# EUROPÄISCHE PATENTSCHRIFT

(11) **EP 1 902 477 B1**
(45) Veröffentlichungstag und Bekanntmachung des Hinweises auf die Patenterteilung: **13.10.2010**
(21) Anmeldenummer: 06721222.5
(22) Anmeldetag: 25.04.2006
(51) Int. Cl.: H01L 31/058, A01M 29/02

(54) **VORRICHTUNG ZUM SCHUTZ EINER PHOTOVOLTAIK-ANLAGE VOR BISSSCHÄDEN DURCH NAGETIERE**
DEVICE FOR PROTECTING A PHOTOVOLTAIC PLANT AGAINST DAMAGES CAUSED BY RODENT BITES
DISPOSITIF POUR PROTEGER UNE INSTALLATION PHOTOVOLTAIQUE CONTRE LES DETERIORATIONS PROVOQUEES PAR LES MORSURES DE RONGEURS

(30) Priorität: 08.07.2005 AT 11602005
(43) Veröffentlichungstag der Anmeldung: 26.03.2008
(73) Patentinhaber: Fronius International GmbH, 4643 Pettenbach (AT)
(72) Erfinder: MARTETSCHLÄGER, Stefan, A-4040 Linz/Donau (AT); ORTNER, Gerald, A-4040 Linz/Donau (AT)
(74) Vertreter: Heger, Georg
(86) Internationale Anmeldenummer: PCT/AT2006/000164
(87) Internationale Veröffentlichungsnummer: WO 2007/022550

(56) Entgegenhaltungen:
- WO-A-94/06287
- DE-A1- 10 241 835
- US-A- 5 864 516
- US-A- 5 929 538
- US-A1- 2003 047 209
- US-B1- 6 396 239

## Beschreibung

Die Erfindung betrifft eine Photovoltaik-Anlage gemäß dem Oberbegriff des Anspruchs 1, wobei die Photovoltaik-Anlage mehrere Komponenten, darunter Solarzellen, eine Steuereinheit, einen Wechselrichter, eine interne Spannungsversorgung, und zumindest einen Mikrokontroller aufweist, welche über entsprechende Leitungen miteinander verbunden sind.

Die US 2003/047209 A1 beschreibt eine Photovoltaik-Anlage der gegenständlichen Art ohne dass auf das Problem der Bissschäden durch Nagetiere eingegangen wird.

Aus der WO 94/06287 A1, der DE 102 41 835 A1, der US 4 484 315 A, der DE 203 19 735 U1 und der EP 664 079 A1 sind Einrichtungen zum Vertreiben von Schädlingen, insbesondere Nagetieren, bekannt, bei welchen Ultraschallwellen ausgesendet werden, welche zur Vermeidung eines Gewöhnungseffekts in Frequenz und/oder Amplitude nach dem Zufallsprinzip variiert werden.

Aus der DE 34 43 568 C2 ist ein Ultraschallsender zum Schutz von Kraftfahrzeugen vor Bissschäden durch Tiere bekannt. Die Versorgung des Ultraschallsenders, welcher in einem eigenen Gehäuse untergebracht ist, erfolgt extern über die Batterie des Kraftfahrzeuges oder über eine standardmäßige Netzsteckdose. Das Ultraschallsignal kann in Tonhöhe, Schalldruck und den Intervallen zwischen den Tonsignalen nicht wiederholend variiert werden. Dies erfolgt mit Hilfe eines im Mikrokontroller des Ultraschallsenders, welcher das Ultraschallsignal erzeugt, integrierten Zufallsgenerator.

Nachteilig ist hierbei, dass der Ultraschallsender in einem eigenen, abgeschlossenen Gehäuse integriert ist. Dadurch ist eine externe Stromversorgung notwendig, welche häufig einen höheren Stromverbrauch verursacht. Auch müssen die Zuleitungen für die Stromversorgung extra verlegt werden. Aus diesem Grund ist für den Betreiber des Ultraschallsenders ein zusätzlicher Aufwand erforderlich.

Einrichtungen zum Vertreiben von Schädlingen auf Basis von Schallwellen, bei welchen die elektrische Versorgung mittels Solarenergie erfolgen kann, sind beispielsweise aus der SE 469 312 B, der US 6 570 494 B1, der US 5 864 516 A und der DE 41 25 402 A1 bekannt. Bei der Ausbildung gemäß der US 5 864 516 A können mit Hilfe von Schaltern die gewünschten Frequenzen der ausgesendeten akustischen Signale ausgewählt werden, wobei auch auf die Möglichkeit einer Fernsteuerung hingewiesen wird.

Die Aufgabe der Erfindung besteht darin, eine oben genannte Photovoltaik-Anlage zu schaffen, welche wirkungsvoll vor Bissschäden durch Nagetiere geschützt werden kann. Der Installations-und Wartungsaufwand soll möglichst gering sein.

Die Aufgabe der Erfindung gemäß Anspruch 1 wird dadurch gelöst, dass ein Ultraschallsender zur Ausstrahlung eines Ultraschallsignals vorgesehen ist, und der Ultraschallsender mit einem die Komponenten der Photovoltaik-Anlage überwachenden Mikrokontroller verbunden ist, so dass das ausgesendete Ultraschallsignal in Abhängigkeit des Mikrokontrollers der Photovoltaik-Anlage steuerbar bzw. regelbar ist. Somit erfolgt der Schutz vor Bissschäden durch Tiere mit einem Ultraschallsender, dessen Steuerung bzw. Regelung über den ohnedies in der Photovoltaik-Anlage vorhandenen Mikrokontroller vorgenommen wird. Aufgrund der Verbindung des Ultraschallsenders mit dem Mikrokontroller der Photovoltaik-Anlage kann das vom Ultraschallsender ausgesandte Ultraschallsignal aufgrund von Messergebnissen des Mikrokontrollers gesteuert bzw. geregelt werden. Durch die Überwachung der Photovoltaik-Anlage durch den Mikrokontroller können Störungen, welche beispielsweise durch Tierbisse hervorgerufen werden, rechtzeitig erkannt werden und zur Beeinflussung des Ultraschallsignals herangezogen werden.

Vorteilhafterweise ist der Ultraschallsender in einer Komponente der Photovoltaik-Anlage, insbesondere dem Wechselrichter und bzw. oder der Steuereinrichtung integriert. Durch die Integration des Ultraschallsenders in einer Komponente der Photovoltaik-Anlage entsteht für den Betreiber der Photovoltaik-Anlage kein zusätzlicher Installations- und Wartungsaufwand.

Das Ultraschallsignal kann in Abhängigkeit der Tageszeit gesteuert bzw. geregelt werden. Somit kann beispielsweise tagsüber, wo viele Nagetiere nicht aktiv sind, der Stromverbrauch des Ultraschallsenders gesenkt werden.

Durch die Maßnahme, dass der Ultraschallsender mit der internen Spannungsversorgung der Photovoltaik-Anlage verbunden ist, wird in vorteilhafter Weise erreicht, dass bei Inbetriebnahme einer Komponente der Photovoltaik-Anlage der Ultraschallsender automatisch aktiviert wird. Die interne Spannungsversorgung kann durch eine Batterie gebildet sein, wodurch bei einem Ausfall einer externen Spannungsversorgung der Ultraschallsender weiterhin versorgt wird und somit die Komponenten der Photovoltaik-Anlage wirkungsvoll vor Bissschäden von Tieren schützt.

Gemäß einem weiteren Merkmal der Erfindung ist vorgesehen, dass der Ultraschallsender mit einem internen Datenbus der Photovoltaik-Anlage verbunden ist. Über diesen Datenbus kann der Ultraschallsender mit Informationen der Photovoltaik-Anlage insbesondere über den Status der Solarzellen aber auch mit Strom versorgt werden.

Wenn der Ultraschallsender mit einem Fernzugriff der Photovoltaik-Anlage verbunden ist, kann auch über diesen Fernzugriff eine Beeinflussung des Ultraschallsenders und somit eine Veränderung des Ultraschallsignals erfolgen.

Der Ultraschallsender kann über den Fernzugriff einer Komponente der Photovoltaik-Anlage konfiguriert werden.

Gemäß einem weiteren Merkmal der Erfindung ist ein Speicher vorgesehen, welcher mit dem Mikrokontroller verbunden ist. Über diesen Speicher kann eine Protokollierung, beispielsweise von Ausfällen von Solarzellen mit entsprechendem Ausfalldatum und Ausfallzeitpunkt protokolliert werden.

Zur Reduktion des Stromverbrauchs des Ultraschallsenders, beispielsweise während der Tageszeit, kann ein Dämmerungssensor zur Erfassung der Lichtstärke vorgesehen sein, welcher mit dem Mikrokontroller verbunden ist, der den Ultraschallsender ansteuert.

Schließlich kann im Ultraschallsender selbst auch ein Mikrokontroller angeordnet sein, der die Parameter des abgestrahlten Ultraschallsignals ändert. Durch die Änderung der Frequenz, Lautstärke, Einschaltdauer bzw. Einschaltpause zur Erzeugung des Ultraschallsignals, kann ein Gewöhnungseffekt der Tiere an das

Ultraschallsignal verringert bzw. ausgeschlossen werden.

Durch die Konfigurierbarkeit des Ultraschallsenders wird vorteilhaft erreicht, dass die Frequenz, Lautstärke und Einschaltdauer bzw. Einschaltpause zur Erzeugung des Ultraschallsignals geändert werden können und somit ein Gewöhnungseffekt der Nagetiere an das Ultraschallsignal ausgeschlossen werden kann.

Um einen Gewöhnungseffekt auszuschließen, strahlt der Ultraschallsender vorzugsweise ein nicht wiederholendes und zufällig in den Paramatern Frequenz, Lautstärke und bzw. oder Einschaltdauer bzw. Einschaltpause variierendes Ultraschallsignal aus, wobei die Parameter für das Ultraschallsignal über den Mikrokontroller der Photovoltaik-Anlage eingestellt werden.

Die Versorgung einer Komponente der Photovoltaik-Anlage kann über einen Datenbus bevorzugt mit einer Wechselspannung erfolgen.

Die vorliegende Erfindung wird anhand der beigefügten, schematischen Zeichnungen näher erläutert.

Darin zeigen:
- Fig. 1: die Komponenten einer Photovoltaik-Anlage mit integriertem Ultraschallsender in schematischer Darstellung; und
- Fig. 2: die Komponenten einer Photovoltaik-Anlage mit einem daran angeschlossenen Ultraschallsender in schematischer Dar- stellung.

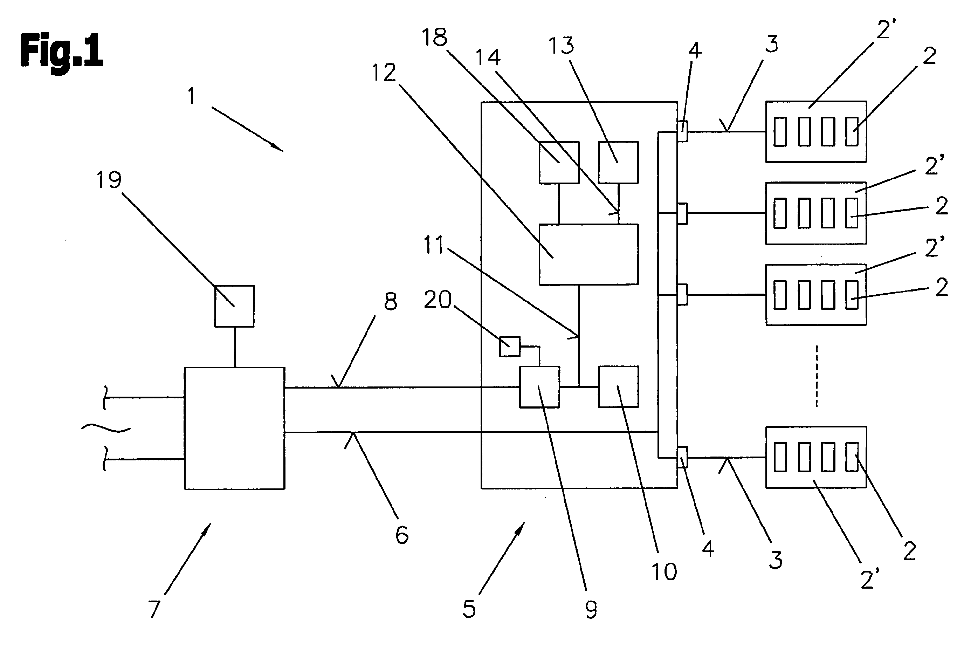

In Fig. 1 ist der Aufbau einer Photovoltaik Anlage 1, welche zur Umwandlung des aus Sonnenlicht erzeugten Gleichstroms in netzkonformen Wechselstrom dient, dargestellt. Die Erzeugung des Gleichstroms erfolgt durch Solarzellen 2, wobei bevorzugt mehrere Solarzellen 2 in Form sogenannter Strings 2' in Reihe geschaltet werden. Damit die Photovoltaik-Anlage 1 wirtschaftlich genutzt werden kann, werden üblicherweise mehrere Strings 2' parallel geschaltet. Die Solarzellen 2 bzw. Strings 2' werden über Leitungen 3 mit entsprechenden Anschlüssen 4 einer Steuereinheit 5 ("String Control") verbunden. Die Steuereinheit 5 bündelt und überwacht den über die Leitungen 3 gelieferten Gleichstrom und leitet ihn über Leitungen 6 an einen Wechselrichter 7, der den Gleichstrom in netzkonformen Wechselstrom umwandelt.

Beispielsweise sind der Wechselrichter 7 und die Steuereinheit 5 über einen Datenbus 8 miteinander verbunden. Der Datenbus 8 dient zum Datenaustausch zwischen den einzelnen Komponenten der Photovoltaik-Anlage 1 und versorgt diese mit der nötigen Spannung, bevorzugt zwischen 8 und 12 Volt. Weiters ermöglicht der Datenbus 8 einen Fernzugriff ("Remote-Zugriff") auf die Komponenten. Der Fernzugriff wird beispielsweise für Wartungen, Konfigurationen, Software Updates oder Statusabfragen verwendet.

Bevorzugt erfolgt die Statusabfrage an der Steuereinheit 5, da diese den Status der einzelnen Anschlüsse 4 ständig überwacht. Die Steuereinheit 5 weiß also, welche Solarzellen 2 bzw. Strings 2' aktiv sind und wie viel Gleichstrom diese liefern. Diese Überwachung wird von einem in der Steuereinheit 5 integrierten Mikrokontroller 9 gesteuert bzw. geregelt. Durch die Überwachung, ob die Solarzellen 2 Gleichstrom liefern, ist dem Mikrokontroller 9 eine Unterscheidung zwischen Tag- und Nachtstunden möglich, da in den Nachtstunden kein Sonnenlicht vorhanden ist und somit nicht in Gleichstrom umgewandelt werden kann. Selbstverständlich kann der Mikrokontroller 9 auch über den Datenbus 8 oder ein eigenes Zeitmodul 18 die Information zur Bestimmung der Tageszeit erhalten. Die aus der Überwachung der Anschlüsse 4 der Steuereinheit 5 resultierenden Stati können in einem Speicher 10 gespeichert werden. Hierzu ist der Speicher 10 mit einem internen Datenbus 11, welcher ebenso den nötigen Strom zum Betrieb liefern kann, mit dem Mikrokontroller 9 verbunden. Somit können die Stati beispielsweise über den Fernzugriff abgefragt werden. Durch die ständige Überwachung kann daher ein Ausfall einer Solarzelle 2 bzw. eines Strings 2' sofort erkannt werden. Der plötzliche Ausfall einer Solarzelle 2 bzw. eines Strings 2' kann mit dem entsprechenden Ausfalldatum und Ausfallzeitpunkt, welche dem Mikrokontroller 9 bekannt sind, im Speicher 10 gespeichert oder beispielsweise direkt über den Datenbus 8 an eine Fehlerzentrale gesendet werden.

Der Fehler kann beispielsweise auf einen Defekt der Solarzellen 2 zurückgeführt werden, welcher beispielsweise durch den Biss von Tieren, insbesondere Nagetieren wie Mäusen, Ratten oder Mader, verursacht wurde. Dies ist darauf zurückzuführen, dass der Gleichstrom einer Photovoltaik-Anlage 1 aus Sonnenlicht erzeugt wird, weshalb die Solarzellen 2 bzw. Strings 2' hauptsächlich im Freien, beispielsweise auf Dächern oder am Boden, montiert und diese somit der Witterung ausgesetzt sind. Daher sind die Solarzellen 2 und die Leitungen 3, 6 und Anschlüsse 4 meist für Tiere frei zugänglich. Wie allgemein bekannt, insbesondere aus dem Kraftfahrzeug-Bereich, verursachen diese Tiere häufig Bissschäden, welche beispielsweise die Funktion der Kraftfahrzeuge einschränken oder verhindern. Aus diesem Grund werden zum Schutz vor Bissschäden durch Tiere Ultraschallsender 12 eingesetzt, deren Ultraschallsignale die Tiere vertreiben sollen. Da sich die Tiere an das vom Ultraschallsender 12 ausgestrahlte, kontinuierliche oder in zeitlichen Abständen wiederholende Ultraschallsignal, welches im Frequenzbereich von ca. 20kHz bis 30kHz liegt, im Laufe der Zeit gewöhnen könnnen, verliert der Ultraschallsender 12 seine Wirkung. Deshalb wird das Ultraschallsignal bevorzugt in Frequenz, Lautstärke und Einschaltdauer bzw. Einschaltpausen per Zufallsgenerator nicht wiederholend variiert und dadurch ein Gewöhnungseffekt vermieden und ein mehr oder weniger dauerhafter Schutz vor Bissschäden erreicht.

Gemäß der vorliegenden Erfindung wird ein derartiger Ultraschallsender 12 zum Schutz der Leitungen 3,6, Anschlüsse 4 und Komponenten der Photovoltaik-Anlage 1 eingesetzt. Der Ultraschallsender 12 wird gemäß Fig. 1 so in der Photovoltaik-Anlage 1 eingesetzt, dass dieser im Gehäuse eine Komponente der Photovoltaik-Anlage 1, beispielsweise der Steuereinheit 5 und/oder dem Wechselrichter 7, integriert ist. Weiters wird der Ultraschallsender 12 mit der internen Spannungsversorgung 13 der jeweiligen Komponente der Photovoltaik-Anlage 1 und einem Mikrokontroller 9 der Photovoltaik-Anlage 1 verbunden.

Somit wird der Aufwand für den Betreiber einer Photovoltaik-Anlage 1 reduziert, da dieser für einen aus dem Stand der Technik bekannten Ultraschallsender 12 einen eigenen, wasserdichten Anschluss für die Versorgungsleitung benötigen würde, sowie einen eigenen Mikrokontroller aufweisen müsste.

Bevorzugt erfolgt die Spannungsversorgung des in einer Komponente der Photovoltaik-Anlage 1, beispielsweise der Steuereinheit 5, integrierten Ultraschallsenders 12 über den internen Datenbus 11. Der interne Datenbus 11 übernimmt bevorzugt die vom Datenbus 8 zur Versorgung für die Steuereinheit 5 gelieferte Spannung von 8 bis 12 Volt. Ebenso ist es möglich, dass der Datenbus 8 eine Wechselspannung liefert, insbesondere bei größeren Distanzen zwischen den Komponenten der Photovoltaik-Anlage 1, und diese mit geeigneten Schaltungen auf die interne Versorgungsspannung von 8 bis 12 Volt einer Komponente umgewandelt wird. Dadurch kann eine bestehende Photovoltaik-Anlage 1 leicht mit dem erfindungsgemäßen integrierten Ultraschallsender 12 über den internen Datenbus 11 erweitert werden. Weiters wird der Stromverbrauch im Vergleich zu einem externen Ultraschallsender 12, welcher standardmäßig mit Netzspannung versorgt wird, wesentlich minimiert und werden daher Kosten gespart. Weiters wird dadurch erreicht, dass bei einer Photovoltaik-Anlage 1, insbesondere bei einer Inselwechselrichteranlage, die Dauer der Energieversorgung für die Verbraucher verlängert wird.

Die Stromkosten bzw. der Stromverbrauch des Ultraschallsenders 12 können auch durch eine zeitliche Steuerung, beispielsweise durch den Mikrokontroller 9 der Steuereinheit 5, aber auch ein eigenes Zeimodul 18 zusätzlich gesenkt werden. Dies kann derart erfolgen, dass tagsüber der Ultraschallsender 12 deaktiviert wird oder die Lautstärke bzw. die Leistung des Ultraschallsignals reduziert wird. Bei Einbruch der Dämmerung, bei welcher die Nagetiere aktiv werden, wird der Ultraschallsender 12 aktiviert oder die Lautstärke bzw. Leistung des Ultraschallsignals dementsprechend erhöht. Die Erkennung der Dämmerung erfolgt beispielsweise durch den Mikrokontroller 9, bevorzugt über die Messung des von den Solarzellen 2 bzw. den Strings 2' gelieferten Gleichstroms. Ebenso kann die Dämmerung über eine im Mikrokontroller 9 integrierte Uhr, ein eigenes Zeitmodul 18 oder über einen Dämmerungssensor 20 erfolgen.

Durch diese Maßnahmen kann insgesamt ein geringer Stromverbrauch des Ultraschallsenders 12 erzielt werden. Dadurch ist es auch möglich, den Ultraschallsender 12 und den Mikrokontroller einer Komponente, welcher das Ultraschallsignal erzeugt, bei einem etwaigen Stromausfall mit Strom aus einer internen Spannungsversorgung 13, insbesondere Batterie zu versorgen. Beispielsweise ist die interne Spannungsversorgung 13 in der Steuereinheit 5 integriert und entsprechend über eine geeignete Verkabelung 14 mit dem Ultraschallsender 12 verbunden. Die interne Spannungsversorgung 13, insbesondere Batterie, kann beispielsweise durch die externe Stromversorgung über den Datenbus 8 und in weiterer Folge über den internen Datenbus 11 geladen werden. Ebenso ist es möglich, dass die interne Spannungsversorgung 13, insbesondere Batterie, von dem von den Solarzellen 2 bzw. Strings 2' gelieferten Gleichstrom geladen wird. Dies erfolgt beispielsweise dann, wenn der von den Solarzellen 2 gelieferte Gleichstrom zur Erzeugung von Wechselstrom zu gering ist. Durch die interne Spannungsversorgung 13 ist auch bei einem Stromausfall die Photovoltaik-Anlage 1 bzw. deren Komponenten vor Tieren, welche Störungen bzw. Schäden durch Bissschäden verursachen können, geschützt.

Durch den geringen Stromverbrauch des Ultraschallsenders 12 wird die Wirkung des Ultraschallsenders 12 bzw. des Ultraschallsignals nicht beeinträchtigt. Die Wirkung des Ultraschallsenders 12 kann beispielsweise über den internen Datenbus 11 verändert werden, da dadurch eine Kommunikation zwischen dem Mikrokontroller 9 der Steuereinheit 5 und dem Ultraschallsender 12 ermöglicht wird.

Wie bereits erwähnt, überwacht der Mikrokontroller 9 die einzelnen Leitungen 3 der Solarzellen 2 bzw. Strings 2', welche an den Anschlüssen 4 der Steuereinheit 5 angeschlossen sind, sowie die Leitung 6 zwischen dem Wechselrichter 7 und der Steuereinheit 5. Dadurch erkennt der Mikrokontroller 9 einen Fehler bzw. eine Störung, beispielsweise wenn eine Solarzelle 2 aus einer unbekannten Ursache keinen Gleichstrom mehr liefert. Aus den Erfahrungswerten von Betreibern von Photovoltaik-Anlagen 1 ist bekannt, dass solche Ursachen mit hoher Wahrscheinlichkeit auf durch Tiere verursachte Bissschäden an den Leitungen 3 bzw. 6 oder den Anschlüssen 4 zurückzuführen sind. Deshalb reagiert der Mikrokontroller 9 der Steuereinheit 5 beim Auftreten solcher Störungen vorzugsweise derart, dass er dies dem Ultraschallsender 12 über den internen Datenbus 11 mitteilt bzw. der Ultraschallsender 12 sofort aktiviert wird. Gleichzeitig kann die vom Mikrokontroller 9 erfasste Störung gespeichert und/oder über den Datenbus 8 an die Fehlerzentrale gesendet werden. Der Ultraschallsender 12 kann das ausstrahlende Ultraschallsignal entsprechend verändern, um die Tiere, welche die Bissschäden verursacht haben, zu vertreiben. Damit können weitere Bissschäden vermieden werden, welche das Tier vermutlich verursachen würde. Durch diese Maßnahme können Schäden bzw. Störungen der Photovoltaik-Anlage 1 reduziert und damit Energieertragseinbußen und damit verbundene finanzielle Einbußen des Betreibers in Grenzen gehalten werden.

Die Veränderung des Ultraschallsignals bei einer unbekannten Störung erfolgt beispielsweise derart, dass die Lautstärke eine zufällige Zeitdauer lang stark erhöht wird, um das Tier zu erschre-cken und so zu vertreiben. Ebenso kann die Frequenz des Ultraschallsignals dementsprechend verändert werden, um weitere Bissschäden durch das Tier zu verhindern. Es kann aber auch die Einschaltdauer erhöht oder die Einschaltpause verkürzt werden, um die entsprechende Wirkung zu erzielen.

Generell werden die Parameter des Ultraschallsignals, d.h. die Frequenz, die Lautstärke und die Einschaltdauer bzw. die Einschaltpause, wie aus dem Stand der Technik bereits bekannt, von der Zufalls-Funktion des Mikrokontrollers einer Komponente der Photovoltaik-Anlage 1, beispielsweise dem Mikrokontroller 9 der Steuereinheit 5, erzeugt. Erfindungsgemäß werden die Werte aus einer Tabelle herangezogen, welche mit Hilfe des beispielsweise im Mikrokontroller 9 der Steuereinheit 5 integrierten Zufallsgenerators generiert wurden. Aus dieser Tabelle wird eine zufällige Kombination von Frequenz, Lautstärke und Einschaltdauer bzw. Einschaltpause gewählt. Hierbei liegen die Werte für die Frequenz insbesondere im Bereich von 19 bis 30 kHz, die Lautstärke im Bereich von 75 bis 90 dB und die Einschaltdauer bzw. die Einschaltpausen im Bereich von 2 bis 20 Sekunden. Damit der ebenso bekannte Gewöhnungseffekt der Tiere nicht eintritt, wird jeder ausgewählte Wert für die auszustrahlende Kombination des Ultraschallsignals um einen weiteren zufällig generierten Wert verändert. Durch die Kombination zweier zufällig generierter Werte für Frequenz, Lautstärke und Einschaltdauer bzw. Einschaltpause wird sichergestellt, dass sich die Werte für das Ultraschallsignal des Ultraschallsenders 12 kaum wiederholen können.

Eine Wiederholung der Ultraschallsignale des Ultraschallsenders 12 kann auch derart vermieden werden, indem die Werte über den Fernzugriff und den Datenbus 8 regelmäßig verändert werden. Beispielsweise können über den Fernzugriff oder eine Fernbedienung 19 dem Zufallsgenerator des Mikrokontrollers 9 bestimmte Frequenzwerte vorgegeben werden, woraus dieser die Tabelle, aus welcher das zufällige Ultraschallsignal gewählt wird, mit den zufälligen Kombinationen von Frequenz, Lautstärke und Einschaltdauer bzw. Einschaltpause generiert.

Ein derartiges Update für die Ultraschallsignale erfolgt beispielsweise am Mikrokontroller 9 der Steuereinheit 5, auf welchen über den Datenbus 8 zugegriffen werden kann. Der Mikrokontroller 9 verarbeitet anschließend die durch das Update erhaltenen Daten und leitet das daraus generierte Ultraschallsignal über den internen Datenbus 11 an den Ultraschallsenders 12 weiter. Über den internen Datenbus 11 wird der Mikrokontroller einer Komponente der Photovoltaik-Anlage 1 über den Status des Ultraschallsenders 12 informiert oder fragt diesen beispielsweise zyklisch ab, wobei der aktuelle Status bevorzugt im Speicher 10 hinterlegt wird. Daher kann über den Fernzugriff bzw. die Fernbedienung 19 und den Datenbus 8 auf einfache Weise die Funktion des Ultraschallsenders 12 überprüft werden. Dies kann beispielsweise in die Überwachungssoftware der Komponenten der Photovoltaik-Anlage 1 integriert werden, welche auf einem Personalcomputer installiert ist. Der Computer wiederum kann über den Fernzugriff, beispielsweise über das Internet oder ein Telefonmodem, auf die Komponenten der Photovoltaik-Anlage 1 zugreifen.

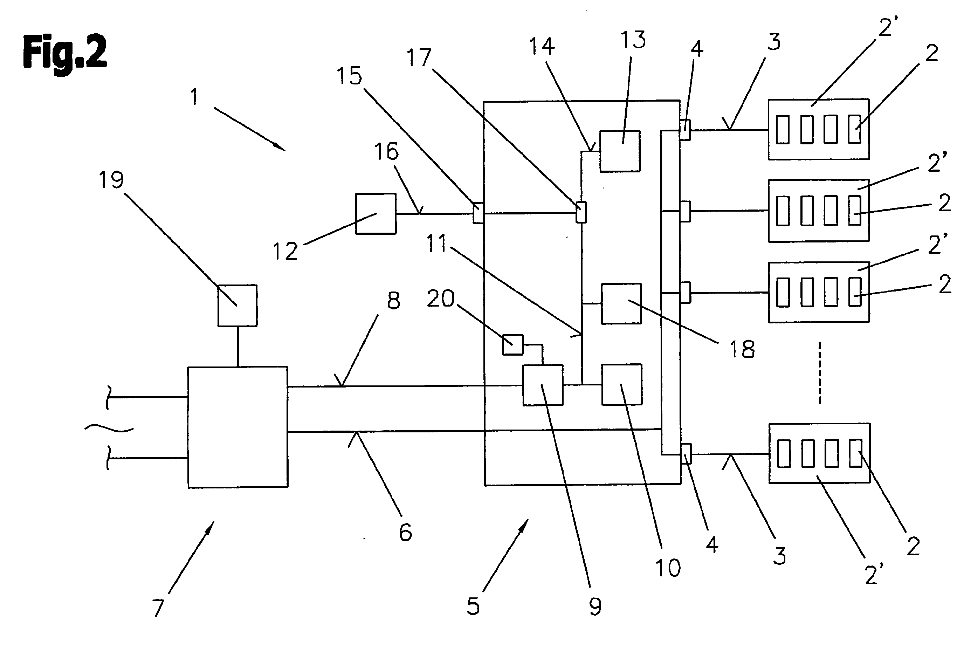

Wie in Fig. 2 dargestellt, ist es ebenso möglich, dass die Komponenten einer Photovoltaik-Anlage 1 zusätzlich oder anstelle des im Gehäuse einer Komponente integrierten Ultraschallsenders 12 einen Anschluss 15 zur Ansteuerung des Ultraschallsenders 12 aufweisen. Hierbei ist der Ultraschallsender 12 extern am Gehäuse einer Komponente am Anschluss 15 angeschlossen. Dies erfolgt beispielsweise über einen externen Datenbus 16, welcher über den Anschluss 15 mit dem internen Datenbus 11 verbunden ist. Dadurch kann der extern angeordnete Ultraschallsender 12 mit Strom versorgt werden und die Daten vom Mikrokontroller einer Komponente der Photovoltaik-Anlage 1, beispielsweise dem Mikrokontroller 9 der Steuereinheit 5, erhalten. Somit wird vor allem die Statusabfrage und das Ausstrahlen des beispielsweise vom Mikrokontroller 9 generierten oder gesteuerten Ultraschallsignals ermöglicht. Dadurch kann der Ultraschallsender 12 geeignet positioniert werden, um den Schutz der Komponenten der Photovoltaik-Anlage 1, insbesondere der Anschlüsse 4 und Leitungen 3, 6 der Steuereinheit 5 vor Bissschäden zu erhöhen.

Bei der dargestellten Ausführung ist der interne Datenbus 11 durch eine Anschlusseinheit 17 unterbrochen, an welcher die Verkabelung 14 der internen Spannungsversorgung 13 angeschlossen ist. Somit sind wiederum die Komponenten der Photovoltaik-Anlage 1 bei einem etwaigen Stromausfall vor Bissschäden durch Nagetiere geschützt, da der Ultraschallsender 12 und der dazugehörige Mikrokontroller mit Strom versorgt sind.

Selbstverständlich kann der extern angeordnete Ultraschallsender 12 auch an einer externen Stromversorgung, beispielsweise einer herkömmlichen Netzsteckdose, angeschlossen werden. Das Ultraschallsignal des Ultraschallsenders 12 kann weiterhin von einem Mikrokontroller der Photovoltaik-Anlage 1 generiert bzw. gesteuert und über den internen Datenbus 11 und den externen Datenbus 16 an den Ultraschallsender 12 geleitet werden.

Im Allgemeinen sei zu den Fig. 1 und 2 erwähnt, dass es selbstverständlich auch möglich ist, dass die Steuerung bzw. Regelung des vom Ultraschallsenders 12 ausgestrahlten Ultraschallsignals ein eigener im Ultraschallsender 12 integrierter Mikrokontroller übernimmt. Dieser kommuniziert dann beispielweise über den internen Datenbus 11 mit dem Mikrokontroller einer Komponente der Photovoltaik-Anlage 1, beispielsweise dem Mikrokontroller 9 der Steuereinheit 5.

Ebenso ist es möglich, dass der Mikrokontroller einer Komponente der Photovoltaik-Anlage ein gleichartiges oder auch unterschiedliches Ultraschallsignal an mehrere Ultraschallsender 12, intern oder extern angeordnet, weiterleitet. Dadurch ist eine Redundanz des Ultraschallsenders 12 gewährleistet und somit die Komponente der Photovoltaik-Anlage 1 optimal vor Bissschäden geschützt.

## Patentansprüche

1. Photovoltaik-Anlage (1) die mehrere Komponenten, darunter Solarzellen (2), eine Steuereinheit (5), einen Wechselrichter (7), eine interne Spannungsversorgung (13), und zumindest einen Mikrokontroller (9) aufweist, welche über entsprechende Leitungen (3, 6, 8, 11) miteinander verbunden sind, **dadurch gekennzeichnet, dass** die Photovoltaik-Anlage (1) eine Vorrichtung zum Schutz dieser Photovoltaik-Anlage (1) vor Bissschäden durch Nagetiere enthält, wobei ein Ultraschallsender (12) zur Ausstrahlung eines Ultraschallsignals vorgesehen ist, und der Ultraschallsender (12) mit einem die Komponenten der Photovoltaik-Anlage (1) überwachenden Mikrokontroller (9) verbunden ist, so dass das ausgesendete Ultraschallsignal in Abhängigkeit des Mikrokontrollers (9) der Photovoltaik-Anlage (1) steuerbar bzw. regelbar ist.

2. Photovoltaik-Anlage (1) nach Anspruch 1, **dadurch gekennzeichnet, dass** der Ultraschallsender (12) in einer Komponente der Photovoltaik-Anlage (1) integriert ist.

3. Photovoltaik-Anlage (1) nach Anspruch 2, **dadurch gekennzeichnet, dass** der Ultraschallsender (12) im Wechselrichter (7) integriert ist.

4. Photovoltaik-Anlage (1) nach Anspruch 2 oder 3, **dadurch gekennzeichnet, dass** der Ultraschallsender (12) in der Steuereinheit (5) integriert ist.

5. Photovoltaik-Anlage (1) nach einem der Ansprüche 1 bis 4, **dadurch gekennzeichnet, dass** das Ultraschallsignal in Abhängigkeit der Tageszeit steuerbar bzw. regelbar ist.

6. Photovoltaik-Anlage (1) nach einem der Ansprüche 1 bis 5, **dadurch gekennzeichnet, dass** der Ultraschallsender (12) mit der internen Spannungsversorgung (13) der Photovoltaik-Anlage (1) verbunden ist.

7. Photovoltaik-Anlage (1) nach einem der Ansprüche 1 bis 6, **dadurch gekennzeichnet, dass** der Ultraschallsender (12) mit einem internen Datenbus (11) der Photovoltaik-Anlage (1) verbunden ist.

8. Photovoltaik-Anlage (1) nach einem der Ansprüche 1 bis 7, **dadurch gekennzeichnet, dass** der Ultraschallsender (12) mit einem Fernzugriff der Photovoltaik-Anlage (1) verbunden ist.

9. Photovoltaik-Anlage (1) nach Anspruch 8, **dadurch gekennzeichnet dass** der Ultraschallsender (12) über den Fernzugriff einer Komponente der Photovoltaik-Anlage (1) konfigurierbar ist.

10. Photovoltaik-Anlage (1) nach einem der Ansprüche 1 bis 9, **dadurch gekennzeichnet, dass** ein Speicher (10) vorgesehen ist, welcher mit dem Mikrokontroller (9) verbunden ist.

11. Photovoltaik-Anlage (1) nach einem der Ansprüche 1 bis 10, **dadurch gekennzeichnet, dass** ein Dämmerungssensor (20) vorgesehen ist, welcher mit dem Mikrokontroller (9) verbunden ist.

12. Photovoltaik-Anlage (1) nach einem der Ansprüche 1 bis 11, **dadurch gekennzeichnet, dass** im Ultraschallsender (12) ein Mikrokontroller angeordnet ist.

13. Photovoltaik-Anlage (1) nach einem der Ansprüche 1 bis 12, **dadurch gekennzeichnet, dass** der Ultraschallsender (12) ein nicht wiederholendes und zufällig in den Parametern Frequenz, Lautstärke und bzw. oder Einschaltdauer bzw. Einschaltpause variierendes Ultraschallsignal ausstrahlt, wobei die Parameter des Ultraschallsignals über den Mikrokontroller (9) der Photovoltaik-Anlage (1) einstellbar sind.

14. Photovoltaik-Anlage (1) nach einem der Ansprüche 1 bis 13, **dadurch gekennzeichnet, dass** die Versorgung einer Komponente der Photovoltaik-Anlage (1) über einen Datenbus bevorzugt mit einer Wechselspannung erfolgt.

## Claims

1. A photovoltaic plant (1) comprising several components, among them solar cells (2), a control unit (5), an inverter (7), an internal voltage supply means (13) and at least one microcontroller (9), which are interconnected via corresponding lines (3, 6, 8, 11), **characterised in that** the photovoltaic plant (1) comprises a device for protecting this photovoltaic plant (1) against rodent bite damage, wherein an ultrasonic transmitter (12) is provided for emitting an ultrasonic signal, and the ultrasonic transmitter (12) is connected to a microcontroller (9) monitoring the components of the photovoltaic plant (1) such that the ultrasonic signal emitted is controllable in dependence on the microcontroller (9) of the photovoltaic plant (1).

2. The photovoltaic plant (1) according to claim 1, **characterised in that** the ultrasonic transmitter (12) is integrated in a component of the photovoltaic plant (1).

3. The photovoltaic plant (1) according to claim 2, **characterised in that** the ultrasonic transmitter (12) is integrated in the inverter (7).

4. The photovoltaic plant (1) according to claim 2 or 3, **characterised in that** the ultrasonic transmitter (12) is integrated in the control unit (5).

5. The photovoltaic plant (1) according to any one of claims 1 to 4, **characterised in that** the ultrasonic signal is controllable in dependence on the time of day.

6. The photovoltaic plant (1) according to any one of claims 1 to 5, **characterised in that** the ultrasonic transmitter (12) is connected to the internal voltage supply means (13) of the photovoltaic plant (1).

7. The photovoltaic plant (1) according to any one of claims 1 to 6, **characterised in that** the ultrasonic transmitter (12) is connected to an internal data bus (11) of the photovoltaic plant (1).

8. The photovoltaic plant (1) according to any one of claims 1 to 7, **characterised in that** the ultrasonic transmitter (12) is connected to a remote access of the photovoltaic plant (1).

9. The photovoltaic plant (1) according to claim 8, **characterised in that** the ultrasonic transmitter (12) can be configured via the remote access of a component of the photovoltaic plant (1).

10. The photovoltaic plant (1) according to any one of claims 1 to 9, **characterised in that** a memory (10) is provided, which memory is connected to the microcontroller (9).

11. The photovoltaic plant (1) according to any one of claims 1 to 10, **characterised in that** a daylight control sensor (20) is provided, which is connected to the microcontroller (9).

12. The photovoltaic plant (1) according to any one of claims 1 to 11, **characterised in that** a microcontroller is arranged in the ultrasonic transmitter (12).

13. The photovoltaic plant (1) according to any one of claims 1 to 12, **characterised in that** the ultrasonic transmitter (12) emits a non-repetitive ultrasonic signal which randomly varies with regard to its parameters frequency, volume and/or on-time or pause, respectively, the parameters of the ultrasonic signal being adjustable via the microcontroller (9) of the photovoltaic plant (1).

14. The photovoltaic plant (1) according to any one of claims 1 to 13, **characterised in that** the supply of a component of the photovoltaic plant (1) is effected via a data bus, preferably with an alternating voltage.

## Revendications

1. Installation photovoltaïque (1), qui présente plusieurs composants, dont des piles solaires (2), une unité de commande (5), un onduleur (7), une alimentation interne en tension (13) et au moins un microcontrôleur (9), qui sont connectés les uns aux autres par des lignes correspondantes (3, 6, 8, 11), **caractérisée en ce que** l'installation photovoltaïque (1) contient un dispositif de protection de cette installation photovoltaïque (1) contre des détériorations causées par des morsures de rongeurs, dans laquelle il est prévu un émetteur d'ultrasons (12) pour émettre un signal ultrasonore et l'émetteur d'ultrasons (12) est connecté au microcontrôleur (9) surveillant les composants de l'installation photovoltaïque (1) de sorte que le signal ultrasonore délivré puisse être commandé ou réglé en fonction du microcontrôleur (9) de l'installation photovoltaïque (1).

2. Installation photovoltaïque (1) selon la revendication 1, **caractérisée en ce que** l'émetteur d'ultrasons (12) est intégré à un composant de l'installation photovoltaïque (1).

3. Installation photovoltaïque (1) selon la revendication 2, **caractérisée en ce que** l'émetteur d'ultrasons (12) est intégré à l'onduleur (7).

4. Installation photovoltaïque (1) selon la revendication 2 ou 3, **caractérisée en ce que** l'émetteur d'ultrasons (12) est intégré à l'unité de commande (5).

5. Installation photovoltaïque (1) selon l'une quelconque des revendications 1 à 4, **caractérisée en ce que** le signal ultrasonore peut être commandé ou réglé en fonction du moment de la journée.

6. Installation photovoltaïque (1) selon l'une quelconque des revendications 1 à 5, **caractérisée en ce que** l'émetteur d'ultrasons (12) est connecté à l'alimentation interne en tension (13) de l'installation photovoltaïque (1).

7. Installation photovoltaïque (1) selon l'une quelconque des revendications 1 à 6, **caractérisée en ce que** l'émetteur d'ultrasons (12) est connecté à un bus de données interne (11) de l'installation photovoltaïque (1).

8. Installation photovoltaïque (1) selon l'une quelconque des revendications 1 à 7, **caractérisée en ce que** l'émetteur d'ultrasons (12) est connecté à un accès distant de l'installation photovoltaïque (1).

9. Installation photovoltaïque (1) selon la revendication 8, **caractérisée en ce que** l'émetteur d'ultrasons (12) peut être configuré via l'accès distant d'un composant de l'installation photovoltaïque (1).

10. Installation photovoltaïque (1) selon l'une quelconque des revendications 1 à 9, **caractérisée en ce qu'**il est prévu une mémoire (10) qui est connectée au microcontrôleur (9).

11. Installation photovoltaïque (1) selon l'une quelconque des revendications 1 à 10, **caractérisée en ce qu'**il est prévu un capteur crépusculaire (20) qui est connecté au microcontrôleur (9).

12. Installation photovoltaïque (1) selon l'une quelconque des revendications 1 à 11, **caractérisée en ce qu'**un microcontrôleur est agencé dans l'émetteur d'ultrasons (12).

13. Installation photovoltaïque (1) selon l'une quelconque des revendications 1 à 12, **caractérisée en ce que** l'émetteur d'ultrasons (12) délivre un signal ultrasonore non récurrent à variation aléatoire des paramètres de fréquence, de volume et/ou de durée ou de pause de connexion, les paramètres du signal ultrasonore pouvant être réglés par le microcontrôleur (9) de l'installation photovoltaïque (1).

14. Installation photovoltaïque (1) selon l'une quelconque des revendications 1 à 13, **caractérisée en ce que** l'alimentation d'un composant de l'installation photovoltaïque (1) s'effectue via un bus de données de préférence avec une tension alternative.
